Europäisches Patentamt

European Patent Office

Office européen des brevets

(19)

(11) Veröffentlichungsnummer: **0 027 198**
**B1**

(12) # EUROPÄISCHE PATENTSCHRIFT

(45) Veröffentlichungstag der Patentschrift:
13.02.85

(21) Anmeldenummer: 80105874.4

(22) Anmeldetag: 27.09.80

(51) Int. Cl.⁴: **C 08 L 77/00,** C 08 L 51/04,
C 08 K 7/20

(54) **Schlagzähe Polyamid-Formmassen.**

(30) Priorität: 10.10.79 DE 2941025

(43) Veröffentlichungstag der Anmeldung:
22.04.81 Patentblatt 81/16

(45) Bekanntmachung des Hinweises auf die Patenterteilung:
13.02.85 Patentblatt 85/7

(84) Benannte Vertragsstaaten:
DE FR GB IT NL

(56) Entgegenhaltungen:
EP - A - 0 001 245
DE - A - 2 454 770
DE - A - 2 801 585

**Die Akte enthält technische Angaben, die nach dem Eingang der Anmeldung eingereicht wurden und die nicht in dieser Patentschrift enthalten sind.**

(73) Patentinhaber: BAYER AG, Konzernverwaltung RP
Patentabteilung, D-5090 Leverkusen 1 Bayerwerk (DE)

(72) Erfinder: Sanderson, John Ronald, Dr. Jefferson
Chemical Co., POB 4128 North Austin Station, Austin,
Texas 78765 (US)
Erfinder: Binsack, Rudolf, Dr., Bethelstrasse 4 a,
D-4150 Krefeld 1 (DE)
Erfinder: Fahnler, Friedrich, Ing. grad.. Wimmersweg 60,
D-4150 Krefeld 1 (DE)
Erfinder: Lindner, Christian, Dr., Riehler Strasse 200,
D-5000 Köln 60 (DE)

**0 027 198**

**Beschreibung**

Die Erfindung betrifft thermoplastische Polyamid-Formmassen mit verbesserter Schlag- und Bruchzähigkeit, sowie verbesserter Witterungs- und Thermostabilität.

Formkörper aus Polyamiden weisen im Trockenzustand eine für viele Anwendungen unzureichende Festigkeit auf. Es gibt eine Reihe von Möglichkeiten, die Zähigkeit zu verbessern. Im einfachsten Fall ist dies möglich durch Aufnahme von Wasser. Wegen der Langwierigkeit dieser Konditionierung, die zudem wegen der Abhängigkeit von äußeren Bedingungen zu Produkten mit schwankenden Eigenschaften führt, sind verschiedene Vorschläge gemacht worden, durch Einarbeiten bestimmter Modifikatoren die Zähigkeit von Polyamiden schon im Trockenzustand zu verbessern.

So wird in der DE-OS 2 742 176 die Schlag- und Kerbschlagzähigkeit von Polyamiden durch Zumischen von Pfropfcopolymeren von (Meth)acrylsäure-Derivaten, insbesondere (Meth)acrylsäureestern auf vernetzte Polybutadiene erhöht.

Überraschenderweise wurde nun festgestellt, daß man eine besonders deutliche Verbesserung der Schlagzähigkeit, insbesondere der mehraxialen Schlagzähigkeit, beobachten kann, wenn man zur Modifizierung der Polyamide Pfropfprodukte auf Basis vernetzter Polybutadiene verwendet, die als Pfropfauflage eine Mischung aus t-Butylacrylat und einen Ester der Acrylsäure mit einem $C_1-C_4$-primären oder sekundären Alkohol aufweisen.

Gegenstand der Erfindung sind daher Polyamidformmassen aus

I. 50—99, vorzugsweise 60—97, insbesondere 70—95 Gew.-% Polyamiden mit einer rel. Viskosität (gemessen an einer 1 gew.-%igen Lösung in m-Kresol bei 25°C) von 2,5—5,0, vorzugsweise von 2,8—4,5, und

II. 1—50, vorzugsweise 3—40, insbesondere 5—30 Gew.-% eines Pfropfproduktes, hergestellt aus
   a) 70—95 Gew.-%, vorzugsweise 75—90 Gew.-%, besonders bevorzugt 80 Gew.-% eines vernetzten Polymerisats aus Butadien und/oder substituiertem Butadien, das gegebenenfalls bis zu 5 Gew.-% aus Styrol und/oder einem Ester der (Meth)Acrylsäure aufgebaut sein kann, als Pfropfgrundlage und
   b) 5—30 Gew.-%, vorzugsweise 10—25 Gew.-%, besonders bevorzugt 20 Gew.-% (Meth)Acrylaten als Pfropfmonomere und

III. 10—60 Gew.-%, bezogen auf die Formmassen, Glasfasern,

dadurch gekennzeichnet, daß die Pfropfmonomeren eine Mischung aus

1. 70—95 Gew.-%, vorzugsweise 75—90 Gew.-%, insbesondere 75—85 Gew.-% n-Butylacrylat und
2. 5—30 Gew.-%, vorzugsweise 10—25 Gew.-% besonders bevorzugt 15—25 Gew.-% des t-Butylesters der (Meth)Acrylsäure sind,

wobei die Summe aus I und II, a) und b) bzw. 1. und 2. jeweils 100 Gew.-% ergeben muß.

Als Polyamide für die erfindungsgemäßen Formmassen können eingesetzt werden: Polyamid-6, Polyamid-6,6, Gemische aus Blockcopolymeren aus diesen beiden Komponenten und Copolymere aus Caprolactam, Adipinsäure und Hexamethylendiamin. Weiterhin kommen Polyamide in Betracht, deren Säurekomponente ganz oder teilweise aus Terephthalsäure und/oder Isophthalsäure und/oder Korksäure und/oder Sebacinsäure und/oder Azelainsäure und/oder Cyclohexandicarbonsäure, deren Diaminkomponente ganz oder teilweise aus m- und/oder p-Xylylendiamin und/oder 2,2,4-Trimethylhexamethylendiamin und/oder 2,4,4-Trimethylhexamethylendiamin und/oder Isophorondiamin besteht.

Außerdem sind Polyamide zu nennen, die ganz oder teilweise aus Lactamen mit 7—12 C-Atomen, gegebenenfalls unter Mitverwendung einer oder mehrerer der oben genannten Ausgangskomponenten, hergestellt werden.

Bevorzugte Polyamide sind Polyamid-6 und Polyamid-6,6. Die rel. Viskosität der verwendeten Polyamide, gemessen als 1 gew.-%ige Lösung in m-Kresol bei 25°C, sollte im Bereich von 2,5 bis 5,0, vorzugsweise von 2,8 bis 4,5, liegen.

Für die Herstellung der Pfropfprodukte werden als Pfropfgrundlage Dienkautschuke auf Basis Polybutadien und/oder Polyisopren, die bis zu 5 Gew.-% Styrol und/oder Ester der (Meth)Acrylsäure wie Methyl- oder Ethyl(meth)acrylat als Comonomere enthalten können, verwendet. Der Gelanteil des als Pfropfgrundlage verwendeten Polymeren sollte ≥ 70 Gew.-%, vorzugsweise ≥ 80 Gew-% (gemessen in Toluol) sein.

Die bevorzugte Pfropfgrundlage besteht aus Polybutadien.

Die bevorzugte Pfropfmonomerenkombination ist n-Butyl- und t-Butylacrylat.

Die erfindungsgemäßen Pfropfprodukte können nach allen bekannten Polymerisationsverfahren (Emulsions-, Lösungs-, Masse-, Suspensions-, Fällungspolymerisation), sowie nach Kombination aus diesen Verfahren hergestellt werden.

Zur Herstellung der Pfropfprodukte werden die aufzupfropfenden Monomeren in Gegenwart der vorgebildeten Pfropfgrundlage polymerisiert. Es bildet sich dabei neben dem eigentlichen Pfropfcopolymerisat auch freie Homo- und Copolymerisate der Pfropfmonomeren. Unter Pfropfproduke wird

2

die Summe der eigentlichen Pfropfcopolymerisate und der freien Polymerisate verstanden. Die Menge der aufgepfropften Monomeren, ihr Molekulargewicht und die Zusammensetzung der gepfropften Monomeren kann in weiten Grenzen durch Variation der Polymerisationsbedingungen beeinflußt werden. Hierzu gehören vor allem: Art des Polymerisationsverfahrens, Temperatur, Aktivatorsystem, Molekulargewichtsregler, Rührbedingungen und Art der Monomer-Dosierung. Erfindungsgemäß sollte die Pfropfausbeute G≥0,4, bevorzugt ≥0,6, besonders bevorzugt ≥0,8 sein. Die Pfropfausbeute G bezeichnet das Mengenverhältnis von aufgepfropftem n-Butylacrylat und t-Butyl(meth)acrylat zur Gesamtmenge in der Pfropfauflage und ist dimensionslos.

Bevorzugtes Polymerisationsverfahren für die erfindungsgemäßen Pfropfpolymeren ist die Emulsionspolymerisation.

Für die Herstellung der Pfropfprodukte durch Emulsionspolymerisation werden vernetzte, vorzugsweise durch Emulsionspolymerisation gewonnene Butadienpolymerisate als Pfropfgrundlagen bevorzugt. Erfindungsgemäß werden bevorzugt solche Pfropfprodukte, die einen »mittleren Teilchendurchmesser« $d_{50}$ von 0,2—0,6 μm, vorzugsweise 0,3—0,5 μm, insbesondere ca. 0,4 μm verwendet. (Zur Bestimmung vgl. W. Scholtan und H. Lange, Kolloid-Z. und Z. Polymere 250 (1972) 782—796 bzw. G. Kämpf, H. Schuster, Angew. Makromolekulare Chemie 14 (1970), S. 111—129).

Zur Herstellung der erfindungsgemäßen Formmassen ist es vorteilhaft, die vorgenannten Pfropfmonomeren in einem bestimmten Verhältnis einzusetzen. Erfindungsgemäß besteht die Mischung aus

70—95 Gew.-%, vorzugsweise 75—90 Gew.-%, insbesondere 75—85 Gew.-% n-Butylacrylat und
5—30 Gew.-%, vorzugsweise 10—25 Gew.-%, insbesondere 25—15 Gew.-% des t-Butylesters der (Meth)Acrylsäure.

Statt nur einer Pfropfgrundlage können auch Abmischungen verschiedener Pfropfgrundlagen zur Herstellung der Pfropfprodukte eingesetzt werden. Weiterhin können statt nur eines Pfropfproduktes auch Abmischungen mehrerer erfindungsgemäßer Pfropfprodukte mit unterschiedlichem Aufbau zur Abmischung mit den Polyamiden herangezogen werden.

Die Herstellung der erfindungsgemäßen Polyamid-Formmassen kann in den üblichen Mischaggregaten wie Walzen, Kneter, Ein- und Mehrwellenextruder erfolgen. Besonders geeignet sind Doppelwellenextruder.

Die Formmassen können auf den genannten Mischaggregaten hergestellt werden, indem die beiden Komponenten I und II gemeinsam aufgeschmolzen und homogenisiert werden, oder indem das Pfropfcopolymerisat II in die Schmelze des Polyamids I eingearbeitet wird.

Die Temperatur bei der Herstellung der Formmassen sollte mindestens 10° C oberhalb des Schmelzpunktes des Polyamids I und unterhalb 310° C, vorzugsweise zwischen 260 und 300° C liegen.

Beim Abmischen von Polyamid-6 und Pfropfprodukt kann eine Pfropfung zwischen den beiden Mischkomponenten stattfinden. Der Pfropfungsgrad, der das Verhältnis von auf das Polyamid aufgepfropftem Pfropfprodukt II zum Gesamt-Pfropfprodukt II bezeichnet, läßt sich bestimmen durch präparative Fraktionierung mit entmischenden Lösungsmitteln (siehe R. Kuhn, Makromol. Chem. 177, [1976], 1525 ff.). Bei den erfindungsgemäßen besonders schlagzähen Formmassen beträgt der Pfropfungsgrad P des Pfropfproduktes II auf das Polyamid ≥0,4, vorzugsweise ≥0,5.

Die erfindungsgemäßen Formmassen zeichnen sich schon bei niedrigen Gehalten an Pfropfprodukt II durch eine erhebliche Verbesserung der Schlagzähigkeit insbesondere auch der mehraxialen Schlagzähigkeit aus. Überraschend für die erfindungsgemäßen Formmassen ist auch die hohe Fließnahtfestigkeit. Darüber hinaus sind die erfindungsgemäßen Formmassen gekennzeichnet durch eine hervorragende Stabilität gegen thermischoxydative Alterung und gegen den Einfluß von Witterungsbedingungen entsprechend dem Weather-O-Meter-Test.

Die erfindungsgemäßen Formmassen können übliche Additive, wie Gleit- und Entformungsmittel, Nukleierungsmittel, Stabilisatoren, Flammschutzmittel sowie Farbstoffe, enthalten. Die Zusatzstoffe werden vorzugsweise bei der Compoundierung in reiner Form oder als Konzentrate zugesetzt.

Die erfindungsgemäß zugesetzten Glasfasern weisen vorzugsweise einen Durchmesser von 8 bis 14 μm auf und bedingen eine unerwartet hohe Schlag- und Kerbschlagzähigkeit, insbesondere bei mehraxialer Schlagbeanspruchung.

Die erfindungsgemäßen Formmassen können in Kombination mit den Glasfasern auch andere Füll- oder Verstärkungsstoffe enthalten, beispielsweise Glaskugeln, Asbest, Talkum, Kaolin, Wollastonit, Microvit, Glimmer oder Kreide.

Die Einarbeitung der Glasfasern, ggfs. in Kombination mit Verstärkungsstoffen, kann nach üblichen Methoden, vorzugsweise auf Doppelwellenextrudern, erfolgen, wie z. B.

a) durch gemeinsame Einarbeitung von Polyamid I, Pfropfprodukt II und Glasfasern III
b) durch Einarbeitung der Glasfasern III in die Formmasse aus I und II,
c) durch gemeinsame Einarbeitung von Polyamid I und Pfropfprodukt II unter Aufschmelzen und anschließende Einarbeitung von Glasfasern III oder
d) durch gemeinsame Einarbeitung von Pfropfprodukt II und Glasfasern III in ggf. aufgeschmolzenes Polyamid I.

Bevorzugte Verfahren sind die Varianten c und d.

Wie bereits erwähnt, zeichnen sich die vertärkten Polyamid-Formmassen durch eine unerwartet hohe Verbesserung aller Zähigkeitseigenschaften, insbesondere der Zähigkeit bei mehrachsialer Schlagbeanspruchung aus, ohne daß andere mechanische Eigenschaften wie Biegefestigkeit und Steifigkeit wesentlich beeinträchtigt werden. Die verstärkten Polyamidformmassen sind daher in hervorragender Weise geeignet zur Herstellung von Formteilen, bei denen es auf eine hohe Schlagbeanspruchung ankommt, beispielsweise zur Herstellung von Gehäusen von Bohrmaschinen und Stoßfängern.

## Beispiele

### Herstellung des Pfropfproduktes

In einem druckfesten Rührgefäß wird eine Lösung aus 80 Gew.-Teilen salzfreiem Wasser, 1,5 Gew.-Teilen Natriumsalz der disproportionierten Abietinsäure und 0,3 Gew.-Teilen Kaliumperoxidisulfat vorgelegt. Nach Verdrängen der Luft durch Stickstoff und Einstellung der Innentemperatur auf 55°C werden 0,35 Gew.-Teile Dodecylmercaptan und A Gew.-Teile Butadien zugesetzt und polymerisiert. Mit absinkender Reaktionsgeschwindigkeit bei fortschreitender Polymerisation wird die Temperatur langsam auf 68°C angehoben.

Nach beendeter Polymerisation werden geringe Mengen des nicht umgesetzten Butadiens durch Ausrühren des erhaltenen Latex unter vermindertem Druck entfernt.

175 Gew.-Teile entsalztes Wasser und 0,3 Gew.-Teile Kaliumperoxidisulfat werden zugesetzt.

Nach Verdrängen der Luft durch Stickstoff und Erwärmen auf 65°C werden 2 Gew.-Teile Emulgator (Na-Salz der disproportionierten Abietinsäure oder Alkylsulfate), gelöst in 25 Gew.-Teilen Wasser, und eine Mischung der Pfropfmonomeren n-Butylacrylat und t-Butylacrylat (B und C Gewichtsteile; s. Tabelle 1).

Die Zulaufdauer beträgt ca. 4 Stunden. Zur Vervollständigung der Reaktion wird nach beendetem Zulauf noch 2 Stunden bei 65°C weiter gerührt.

Der so erhaltene Pfropfprodukt-Latex wird nach Zusatz von 1 Gew.-Teil eines phenolischen Antioxidans (2,6-Di-tert.-butyl-p-kresol) mit 2%iger $MgSO_4$/Essigsäure-Lösung (Mischungsverhältnis 1 : 1 Gew.-Teile) koaguliert, das Koagulat abgetrennt, salzfrei gewaschen und bei 70°C im Vakuum getrocknet.

Die Zusammensetzung der Pfropfprodukte ist der Tabelle 1 zu entnehmen.

### Tabelle 1

Zusammensetzung der Pfropfprodukte

| Nr. | Pfropfgrundlage A Gew.-Teile Butadien | Pfropfauflage B Gew.-Teile n-Butylacrylat | C Gew.-Teile t-Butylacrylat | mittlerer Teilchendurchmesser μm | Pfropfausbeute G |
|-----|------|------|------|------|------|
| J | 80 | 19 | 1 | 0,4 | 0,93 |
| K | 80 | 18 | 2 | 0,4 | 0,94 |
| L | 80 | 16 | 4 | 0,4 | 0,95 |
| M | 80 | 14 | 6 | 0,4 | 0,96 |
| N | 90 | 8 | 2 | 0,4 | 0,97 |
| O | 95 | 4 | 1 | 0,4 | 0,97 |

### Herstellung von verstärkten Formmassen aus Pfropfprodukt und Polyamid
### (Beispiele 1—6)

Auf einem Einwellenextruder (16 mm Ø, 1500 mm Länge, mit Scher- und Mischteilen) wurden Polycaprolactam, mit einer rel. Viskosität von 3,1, gemessen als 1 gew.-%ige Lösung in m-Kresol bei 25°C, und Pfropfprodukt L sowie die übliche Menge Nucleierungsmittel und Entformungsmittel mit der

0 027 198

in der Tabelle 3 genannten Zusammensetzung bei 250—280°C aufgeschmolzen. In die Schmelze wurden Glasfasern in Form von »chopped strands« so eingearbeitet, daß die durch eine Düse in Strangform ausgepreßte Mischung ca. 30 Gew.-% Glasfasern enthielt. Die Stränge wurden in einem Wasserbad abgekühlt, granuliert und getrocknet. Das Granulat wurde auf einer Spritzgußmaschine zu Prüfkörpern verarbeitet. Die Spritzlinge wurden trocken in spritzfrischem Zustand geprüft.

Zur Beurteilung der mechanischen Eigenschaften wurden Schlagzähigkeit und Kerbschlagzähigkeit (nach DIN 53 453), Schädigungsarbeit nach dem mehraxialen Schlagversuch (nach DIN 53 443) sowie Biegefestigkeit (nach DIN 53 452) bestimmt.

Erfahrungsgemäß hängt die Schlagzähigkeit bei faserverstärkten Werkstoffen stark vom Orientierungsgrad der Fasern ab. Bei den nach dem Spritzgießverfahren hergestellten Prüfkörpern für den Schlagbiegeversuch nach DIN 53 453 sind die Glasfasern in einem hohen Maß in Fließrichtung, d. h. parallel zur Länge des Prüfkörpers, orientiert. Die Schlagbeanspruchung erfolgt quer zur Fließrichtung (quer zur Faserrichtung). Hier liegt die Ursache dafür, daß mit steigendem Glasfasergehalt höhere Schlagzähigkeitswerte gemessen werden. Längs zur Fließrichtung (Faserrichtung) ist die Schlagzähigkeit aber deutlich niedriger.

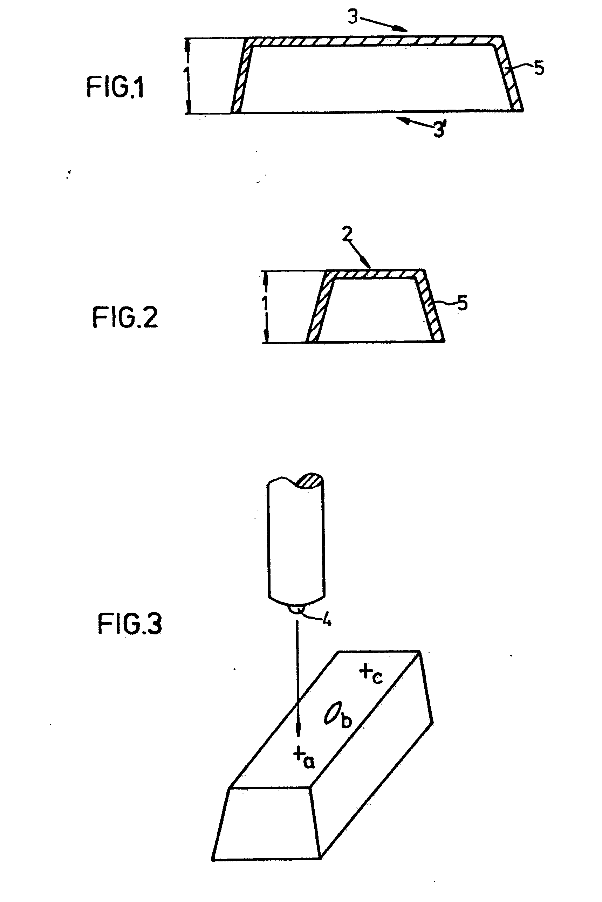

Ein besseres Bild von der Zähigkeit der verstärkten Polyamide unter Schlagbeanspruchung liefert erfahrungsgemäß der Stoß- oder Fallbolzenversuch nach DIN 53 443, wie es in Figur 3 dargestellt ist. In dieser Figur hat die Kugel 4 einen Radius von 25 mm

a)   bedeutet die Auftreffstelle der Kugel,
b)   den Stangenanguß (∅ ca. 4 mm) in der Mitte der Bodenfläche und
c)   eine zu a) parallele Prüfstelle.

Voraussetzung ist allerdings, daß die Prüfkörper einen möglichst geringen Orientierungsgrad aufweisen, wie beispielsweise das in den Figuren 1 und 2 dargestellte Testkästchen, das eine Höhe 1 von 40 mm, eine Breite 2 von 46,7 mm und eine Länge 3 von 106,7 mm bzw. 3' von 120 mm und eine Wanddicke 5 von 1,5 mm aufweist.

Zusammensetzung und Eigenschaften der verstärkten Polyamidformmassen sind Tabelle 3 zu entnehmen.

Tabelle 3

Zusammensetzung und Eigenschaften der vertärkten Polyamidformmassen

| Beispiel Nr. | Pfropfprodukt L Gew.-%[2] | Farbstoff[1] Gew.-%[2] | Schlag-zähigkeit kJ/m² | Kerbschlag-zähigkeit kJ/m² | Schädigungs-arbeit am Kästchen N · m | Biegefe-stigkeit MPa |
|---|---|---|---|---|---|---|
| 1 | 3 | — | 56,8 | 15,2 | 2,9 | 235 |
| 2 | 5 | — | 57,7 | 16,5 | 4,2 | 230 |
| 3 | 10 | — | 63,0 | 20,0 | 8,5 | 228 |
| 4 | 15 | — | 68,0 | 28,3 | 18,3 | 211 |
| 5 | 3 | 0,5 | 49,8 | 12,4 | 2,8 | 236 |
| 6 | 5 | 0,5 | 52,6 | 15,1 | 3,5 | 232 |

1)   Ultramarin- und Cadmium-Pigmente
2)   bezogen auf die Gesamtformmasse

5

**0 027 198**

## Patentansprüche

1. Polyamidformmassen aus

I.  50—99 Gew.-% Polyamiden mit einer relativen Viskosität (gemessen an einer 1 gew.-%igen Lösung in m-Kresol bei 25°C) von 2,5—5,0 und

II. 1—50 Gew.-% Pfropfprodukt hergestellt aus

    a.  70—95 Gew.-% eines vernetzten Polymerisats aus Butadien und/oder substituiertem Butadien, das gegebenenfalls bis zu 5 Gew.-% aus Styrol und/oder einem Ester der (Meth)Acrylsäure aufgebaut sein kann, als Pfropfgrundlage und

    b.  5—30 Gew.-% von (Meth)acrylaten als Pfropfmonomere und

III. 10—60 Gew.-%, bezogen auf die Gesamtformmassen, Glasfasern, dadurch gekennzeichnet, daß die Pfropfmonomeren eine Mischung aus

    1.  70—95 Gew.-% des n-Butylacrylats und

    2.  5—30 Gew.-% des t-Butylesters der (Meth)Acrylsäure sind,

wobei die Summe aus I und II, a) und b) bzw. 1. und 2. jeweils 100 Gew.-% ergeben muß.

2. Polyamidformmassen nach Anspruch 1, dadurch gekennzeichnet, daß die Pfropfmonomeren eine Mischung aus 75—90 Gew.-% der Komponente 1, und 10—25 Gew.-% der Komponente 2, sind.

3. Polyamidformmassen nach Ansprüchen 1 und 2, dadurch gekennzeichnet, daß sie 60—97 Gew.-% der Polyamid-Komponente und 3—40 Gew.-% der Pfropfkomponente enthalten.

## Claims

1. Polyamide moulding compositions of:

I.  from 50 to 99% by weight of polyamides having a relative viscosity (as measured on a 1% by weight solution in m-cresol at 25°C) of from 2.5 to 5.0 and

II. from 1 to 50% by weight of graft product produced from

    a.  70 to 95% by weight of a crosslinked polymer of butadiene and/or substituted butadiene, of which up to 5% by weight may optionally of styrene and/or an ester of (meth)acrylic acid, as the graft base and

    b.  5 to 30% by weight of (meth)acrylates as graft monomer and

III. from 10 to 60% by weight, based on the moulding compositions as a whole, of glass fibres, characterized in that the graft monomers are a mixture of

    1.  from 70 to 95% by weight of n-butyl acrylate and

    2.  from 5 to 30% by weight of the t-butyl ester of (meth)acrylic acid,

the sum of I and II, the sum of a) and b) and the sum of 1. and 2. having respectively to amount to 100% by weight.

2. Polyamide moulding compositions as claimed in Claim 1, characterized in that the graft monomers are a mixture of 75 to 90% by weight of component 1 and 10 to 25% by weight of component 2.

3. Polyamide moulding compositions as claimed in Claims 1 and 2, characterized in that they contain from 60 to 97% by weight of the polyamide component and from 3 to 40% by weight of the graft component.

**Revendications**

1. Matières à mouler en polyamide composées de

I. 50—99% en poids de polyamides ayant une viscosité relative (mesurée sur une solution à 1% en poids dans le m-crésol à 25°C) de 2,5 à 5,0 et

II. 1—50% en poids de produit greffé obtenu à partir de

    a. 70—95% en poids d'un produit réticulé de polymérisation du butadiène et/ou d'un butadiène substitué, qui peut éventuellement être édifié, en proportion allant jusqu'à 5% en poids, à partir de styrène et/ou d'un ester d'acide (méth)acrylique, comme substrat de greffage et

    b. 5 à 30% en poids de (méth)acrylates comme monomères à greffer et

III. 10—60% en poids, par rapport aux matières à mouler totales, de fibres de verre, caractérisées en ce que les monomères à greffer consistent en un mélange de

    1. 70—95% en poids d'acrylate de n-butyle et

    2. 5—30% en poids de l'ester tertio-butylique de l'acide (méth)acrylique,

la somme de I et II, a) et b) et la somme 1. et 2. devant représenter dans chaque cas 100% en poids.

2. Matières à mouler en polyamide suivant la revendication 1, caractérisées en ce que les monomères à greffer consistent en un mélange de 75 à 90% en poids du composant 1 et de 10 à 25% en poids du composé 2.

3. Matières à mouler en polyamide suivant les revendications 1 et 2, caractérisées en ce qu'elles contiennent 60 à 97% en poids du composant polyamide et 3 à 40% en poids du composant à greffer.

FIG.1

FIG.2

FIG.3